# EUROPEAN PATENT SPECIFICATION

(11) **EP 3 126 297 B1**
(45) Date of publication and mention of the grant of the patent: **09.05.2018**
(21) Application number: 15717530.8
(22) Date of filing: 30.03.2015
(51) Int. Cl.: C02F 1/52, C02F 1/66, D21C 11/00, C02F 103/28

(54) **METHOD AND SYSTEM FOR REDUCING PHOSPHORUS IN EFFLUENT OR FILTRATE**
VERFAHREN UND SYSTEM ZUR VERRINGERUNG VON PHOSPHOR IN EINEM ABWASSER ODER FILTRAT
PROCÉDÉ ET SYSTÈME DE RÉDUCTION DE PHOSPHORE DANS UN EFFLUENT OU FILTRAT

(30) Priority: 31.03.2014 FI 20145311
(43) Date of publication of application: 08.02.2017
(73) Proprietor: UPM-Kymmene Corporation, 00100 Helsinki (FI)
(72) Inventor: RISTOLAINEN, Matti, FI-53900 Lappeenranta (FI); HASSINEN, Esa, FI-53500 Lappeenranta (FI); SAARELA, Sami, FI-00240 Helsinki (FI)
(74) Representative: Papula Oy
(86) International application number: PCT/FI2015/050222
(87) International publication number: WO 2015/150631

(56) References cited:
- WO-A1-2015/001185
- US-A- 5 401 362
- US-A1- 2007 092 422
- US-B1- 6 830 696

## Description

### FIELD OF THE INVENTION

The invention relates to a method for reducing phosphorus in effluent or filtrate from a process which comprises a stage in which green liquor dregs are filtered using a green liquor dregs filter and at least one stage in which conditions are acidic. The invention further relates to a system for reducing phosphorus in effluent or filtrate from a process, in particular a chemical pulping process.

### BACKGROUND OF THE INVENTION

Effluents produced in pulp or paper mills and other effluent-producing plants are typically treated in waste water treatment plants to reduce the amount of compounds which may be harmful to the environment, such as phosphorus. Phosphorus must be removed from effluents that are discharged from the mill to the environment, e.g. to a water system, to prevent pollution. As environmental regulations restricting phosphorus emissions tend to become stricter, there is a need to reduce the amount of phosphorus in effluents that are conveyed from the mill to a waste water treatment plant and ultimately to the environment.

Traditional solutions for phosphorous removal involve e.g. tertiary treatment or use of phosphorus concentrating (P-concentrating) microorganisms. A drawback of tertiary treatment is the high investment and operating cost. P-concentrating microorganisms work in anaerobic media, which complicates the operations required and involves specific treatments for the effluent to be used.

The inventors have therefore recognized the need for a method for reducing phosphorus in effluent obtained from processes such as chemical pulping processes.

US6830696 discloses a method of treating spent alkaline pulping liquor. US2007/0092422 discloses a method for removing transition metals from the treatment fluids in a cellulose pulp mill.

### PURPOSE OF THE INVENTION

The purpose of the invention is to provide a new type of method for reducing phosphorus in effluent or filtrate from a process which comprises a stage in which green liquor dregs are filtered using a green liquor dregs filter and at least one stage in which conditions are acidic and a new type of system for reducing phosphorus in effluent or filtrate from a process, in particular a chemical pulping process.

### SUMMARY

The method according to the present invention is characterized by what is presented in claim 1.

The system according to the present invention is characterized by what is presented in claim 18.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 is a flow chart illustration of a method for reducing phosphorus in effluent or filtrate from a process which comprises a stage in which green liquor dregs are filtered using a green liquor dregs filter and at least one stage in which conditions are acidic.
Fig. 2 is a schematic illustration of a system for reducing phosphorus in effluent or filtrate from a chemical pulping process which comprises a green dregs filtration stage and at least one stage in which conditions are acidic.

### DETAILED DESCRIPTION OF THE INVENTION

The present invention relates to a method for reducing phosphorus in effluent or filtrate from a process which comprises a stage in which green liquor dregs are filtered using a green liquor dregs filter and at least one stage in which conditions are acidic, wherein the method comprises the steps of:
a) obtaining an effluent or filtrate from a stage in which conditions are acidic;
b) adjusting pH of at least a portion of the effluent or filtrate to alkaline with an alkaline agent;
c) allowing phosphorus to be precipitated in form of a phosphate salt;
d) separating the precipitate to produce purified effluent or filtrate and a sludge comprising the precipitate; and
e) filtering the sludge comprising the precipitate obtainable from step d) using the green liquor dregs filter.

In this context, the term "effluent" or "filtrate" should be understood as referring to an aqueous liquid that contains phosphorus, which is to be removed either completely or in part.

In this context, the term "effluent" should also be understood as referring to a waste liquid which is obtained from the process and which is to be discharged from the process. The effluent is usually treated for purifying purposes by waste water treatment before discharging. The waste water treatment may take place at a waste water treatment plant of a chemical pulping mill. The effluent may also refer e.g. a bleaching effluent or a filtrate which is to be discharged or to be treated for purifying purposes by waste water treatment before discharging.

In this context, the term "filtrate" should also be understood as referring to an effluent from which solid suspended matter is removed by a filtration treatment, a flotation treatment or any other treatment. Thus the term "filtrate" does not necessarily imply that the solid suspended matter, such as fibers, have been removed by filtration.

The process may, in principle, be any process involving treatment of phosphorus-containing material of natural origin, provided it comprises at least one stage which produces acidic filtrate or effluent and a stage in which green liquor dregs are filtered using a green liquor dregs filter.

The inventors of the present invention surprisingly found out that phosphorus present in the effluent or filtrate may be precipitated, and the resulting phosphorus-containing precipitate may be conveniently filtered using existing green dregs filtration equipment; thus the removal of the precipitate requires minimal equipment investments.

Thus the sludge comprising the phosphorus-containing precipitate may be conveyed to and filtered using the green liquor dregs filter. As the conditions at the green liquor dregs filter are alkaline, the phosphorus remains in the precipitate during the filtration.

In an embodiment, the method comprises the steps of:
a1) obtaining a first portion of an effluent or filtrate from a stage in which conditions are acidic;
a2) obtaining a second portion of an effluent or filtrate from the same or different stage in which conditions are acidic;
b) adjusting pH of the first portion of the effluent or filtrate to alkaline with an alkaline agent;
c) allowing phosphorus to be precipitated in form of a phosphate salt;
d) separating the precipitate to produce purified effluent or filtrate and a sludge comprising the precipitate;
e) filtering the sludge comprising the precipitate obtainable from step d) using the green liquor dregs filter; and
f) combining the purified effluent or filtrate with the second portion of the effluent or filtrate.

In principle, any suitable method for separating the precipitate may be used in step d).

In an embodiment, the precipitate is separated in step d) by decantation, clarification, flotation, sedimentation or filtration. A purified effluent or filtrate is obtained. Further, a sludge comprising the precipitate and an amount of effluent or filtrate is obtained. As the volume of the sludge is smaller, typically much smaller, than the volume of the purified effluent or filtrate, the green liquor dregs filter does not become overloaded with the sludge.

In an embodiment, the precipitate is separated in step d) using a decanter centrifuge, a clarifier, a solids separator, a flocculation apparatus or a filter.

In an embodiment, the precipitate is separated in step d) by liquid-solid filtration, pressure filtration, candle filtration, or disc filtration, or by any other suitable filtration method.

In an embodiment, the sludge comprising the precipitate obtainable from step d) is filtered in step e) to obtain a filter cake comprising the filtered precipitate; and the method further comprises the step g) of recovering the filter cake.

Prior to recovering, the filter cake may be washed.

In an embodiment, the sludge comprising the precipitate obtainable from step d) and green liquor dregs are filtered in step e) for obtaining a filter cake comprising the precipitate and green liquor dregs; and the method further comprises the step g) of recovering the filter cake.

In an embodiment, the sludge comprising the precipitate obtainable from step d) is filtered using a pre-coated green liquor dregs filter in step e).

In an embodiment, the sludge comprising the precipitate obtainable from step d) is filtered in step e) using a green liquor dregs filter pre-coated with a layer of lime mud.

In an embodiment, the method further comprises the step g) of recovering the filter cake comprising the filtered precipitate, green dregs and at least a portion of the layer of lime mud. The pre-coat layer of lime mud contains calcium carbonate. In such an embodiment, the recovered filter cake thus comprises calcium in the form of calcium carbonate.

The recovered filter cake or precipitate can be reprocessed further for end uses or discarded.

The method may be used in a chemical pulping mill, in which chemical pulp is produced using the so-called sulphate or kraft process.

In this context, the term "pulp" should be understood as referring to a lignocellulosic fibrous material prepared by chemically or mechanically separating cellulose fibres from a natural fibre based material. So-called kraft or sulphate processes can be used for producing pulp.

In an embodiment, the process is a chemical pulping process.

In an embodiment, the process is a kraft pulping process.

In an embodiment, the effluent or filtrate is issued from fiber line operations of a chemical pulp mill, such as a kraft pulp mill.

The operations of a kraft pulp mill are conventionally divided in a fiber line, a chemical recovery system and waste water treatment. The fiber line operations typically include cooking, brownstock washing (washing away spent cooking chemicals from the pulp), oxygen delignification, bleaching and pulp drying. In many conventional kraft pulp mills, the pH in the cooking, brownstock washing, oxygen delignification and knotting and screening stages is alkaline. Any effluents or filtrates obtained from such stages are typically alkaline. Often the pH in one or more bleaching stages is acidic. Thus effluents or filtrates obtained from bleaching stages may be acidic or alkaline, depending on the specific stage and the chemicals used therein.

The chemical recovery system of a kraft pulp mill typically includes a green dregs filtration stage, in which dregs removed from the bottom of a green liquor clarifier, from a green liquor filter or from another apparatus suitable for separating green dregs are washed and filtered to recover alkali residue remaining in the green liquor dregs.

In an embodiment, the effluent or filtrate is obtained from the first stage of the process in which the conditions are acidic.

The present inventors have found that typically very high phosphorus content is found in effluents or filtrates obtainable from the first stage of the process in which the conditions are acidic. For instance, a concentration of phosphorus of the effluent or filtrate may be 5 - 20 mg/l, or 9 - 16 mg/l. Thus it may be very useful to obtain the effluent or filtrate from the first stage of the process in which the conditions are acidic. In this embodiment, phosphorus content in effluents or filtrates from the process may significantly be reduced, even if only the effluent or filtrate from the first stage of the process in which the conditions are acidic, or a portion thereof, is treated according to the method of the invention.

The effluent or filtrate may be obtained from one or more stages of the process in which the conditions are acidic.

The first portion of the effluent or filtrate and the second portion of the effluent or filtrate may be obtained from the same stage of the process in which the conditions are acidic. They may also be obtained from two or more different stages of the process in which the conditions are acidic.

In an embodiment, the first portion of the effluent or filtrate is obtained from a first stage in which conditions are acidic; and the second portion of the effluent or filtrate is obtained from a second and/or later stage in which conditions are acidic.

In an embodiment, the first portion of the effluent or filtrate is obtained from the first stage of the process in which conditions are acidic.

In an embodiment, the at least a portion or the first and/or second portion of effluent or filtrate comprises an effluent or filtrate obtained from a stage in which conditions are acidic, to which effluent or filtrate an alkaline effluent or filtrate has been added. In this embodiment, the pH of said second portion of effluent or filtrate may not be alkaline prior to step f). The pH of the first portion of effluent or filtrate may already be made alkaline by the addition or mixing of alkaline effluent or filtrate therein prior to step b), as the pH will in any case be adjusted to alkaline. The alkaline effluent or filtrate may be obtained from a stage of the process in which conditions are alkaline. The alkaline effluent may be added or mixed to an effluent or filtrate obtained from a stage in which conditions are acidic prior to step a), a1), a2), a3) and/or b). The alkaline effluent or filtrate may also be added or mixed to the second portion prior to step f), provided the pH of said second portion of effluent or filtrate is not alkaline prior to step f).

In an embodiment, the first portion of the effluent or filtrate is obtained from a first stage in which conditions are acidic; and the second portion of the effluent or filtrate is obtained from a second stage in which conditions are acidic.

In an embodiment, the method comprises the steps of:
a) obtaining an effluent or filtrate from a stage in which conditions are acidic;
a3) dividing the effluent or filtrate into a first portion and a second portion;
b) adjusting pH of the first portion of the effluent or filtrate to alkaline with an alkaline agent;
c) allowing phosphorus to be precipitated in form of a phosphate salt;
d) separating the precipitate to produce purified effluent or filtrate and a sludge comprising the precipitate;
e) filtering the sludge comprising the precipitate obtainable from step d) using the green liquor dregs filter; and
f) combining the purified effluent or filtrate with the second portion of the effluent or filtrate.

In an embodiment, the effluent or filtrate is obtained from the first stage of fiber line operations of a chemical pulp mill in which the conditions are acidic. The chemical pulp mill may be e.g. a kraft pulp mill.

In an embodiment, the pH of the effluent or filtrate obtained in step a), a1), a2) and/or a3) is below 7; or below 6; or below 3.

In an embodiment, the pH of the effluent or filtrate obtained in step a), a1), a2) and/or a3) is 1 - 7; or 2 - 7; or 1 - 6; or 2 - 6; or 1 - 3; or 2 - 3.

In an embodiment, the effluent or filtrate is an acidic bleaching effluent or an acidic bleaching filtrate. Such acidic bleaching filtrates or acidic bleaching effluents are typically obtained from a chemical pulping process. In an embodiment, the acidic bleaching filtrate or acidic bleaching effluent is the acidic bleaching filtrate or acidic bleaching effluent obtainable from the first acidic bleaching stage.

Typically very high phosphorus content is found in the acidic bleaching filtrate obtainable from the first acidic bleaching stage. Thus it may be very useful to obtain the acidic bleaching filtrate from the first acidic bleaching stage. In this embodiment, phosphorus content in effluents from the process may significantly be reduced, even if only the acidic bleaching filtrate from the first acidic bleaching stage, or a portion thereof, is treated according to the method of the invention.

In this context, the term "bleaching stage" may refer to any stage after brown stock stages, and should be understood as also including oxygen delignification stage(s), which selectively removes lignin, hexenuronic acid and/or metals. In this context, the term "bleaching stage" may also refer to any stages immediately following the oxygen stage. First bleaching stage can be an alkaline or an acidic one. Commonly it is an acidic A stage followed by a D stage without a washing stage between them. This is the so called A/D1 bleaching stage.

In an embodiment, the filtrate is an A, D, D1, A/D or A/D1 bleaching filtrate or any other acidic bleaching filtrate. "A" should be understood as referring to an acidic bleaching stage. "D" should be understood as referring to a chlorine dioxide bleaching stage. A, D and D1 stages may be stages separate from each other; each of A, D and D1 stages should however in this context be understood as being bleaching stages.

The acidic effluent may also be obtainable from the acidification treatment of unbleached pulp, which is performed before the bleaching, after brownstock washing and oxygen treatment of the oxygen delignification unit. This acidic effluent also typically contains dissolved phosphorus compounds.

The filtrate may also be an acidic filtrate obtainable from the acidification treatment of the unbleached pulp after brownstock washing, which treatment is performed to dissolve acid-dissolving phosphorus compounds contained in the pulp before bleaching.

In an embodiment, the pH of the at least a portion of the effluent or filtrate is adjusted in step b) to 8 - 14; or 8 - 12; or to 9 - 10; or to 9.5 - 9.8.

In an embodiment, the pH of the first portion of the effluent or filtrate is adjusted in step b) to 8 - 14; or 8 - 12; or to 9 - 10; or to 9.5 - 9.8.

When pH of the at least a portion of the effluent or filtrate is adjusted to alkaline, phosphorus precipitates, typically as calcium phosphate. The source of calcium in the calcium phosphate precipitated may be calcium originally contained in the effluent or filtrate and/or calcium that is introduced to the at least a portion of the effluent or filtrate as a component of the alkaline agent. Thus the precipitate typically contains calcium phosphate. The precipitate may further comprise other phosphate salts, such as calcium hydrogen phosphate; calcium carbonate; calcium sulphate; organic phosphorus compounds; and/or other precipitated/coprecipitated components.

The alkaline agent may be any agent that is capable of raising the pH of the at least a portion of the effluent or filtrate to a pH at which phosphorus can precipitate. The alkaline agent may be a solution, such as an aqueous solution, a solid, or a mixture thereof.

In an embodiment, the alkaline agent is
CaO;
an alkali metal hydroxide, such as NaOH;
Ca(OH)₂;
NH₄OH ;
an alkaline effluent or filtrate;
an alkaline bleaching effluent or filtrate; or
a powder, an aqueous solution, or any mixture thereof.

In an embodiment, the alkaline agent is solid CaO.

In an embodiment, the alkaline agent is an aqueous solution of CaO, an aqueous solution of an alkali metal hydroxide such as NaOH, an aqueous solution of Ca(OH)₂, an aqueous solution of NH₄OH, or any mixture thereof.

The alkaline agent may also be a mixture of a solid and an aqueous solution.

If the alkaline agent is Ca(OH)₂, CaO, a powder, an aqueous solution or any mixture thereof, at least some of the calcium ions contained therein may precipitate with the phosphorus contained in the at least a portion of the effluent or filtrate.

The alkaline agent may be an alkaline agent that is used for adjusting pH of waste water, such as an aqueous solution of Ca(OH)₂.

The concentration of the alkaline agent may vary. A relatively strong alkaline agent, or an aqueous solution containing a high concentration of an alkaline agent, may however have the added utility that a small volume of the alkaline agent is needed to adjust the pH to alkaline. Thus an increase in volume and dissolution of the precipitate can be avoided. For instance, if an aqueous solution of Ca(OH)₂ is used as the alkaline agent, the concentration of the aqueous solution of Ca(OH)₂ is preferably at least 2 g/l, or more preferably at least 20 g/l. Even more preferably the alkaline agent is solid CaO..

In step b), the at least a portion of the effluent or filtrate may be mixed with the alkaline agent. The mixing typically accelerates the precipitation of phosphorus. The mixing may be effected e.g. by agitation. The mixing may also be effected using an apparatus suitable for mixing the alkaline agent with the at least a portion of the acidic effluent or filtrate. Such apparatus may be e.g. a tank or a piping comprising means for mixing. The means for mixing may be e.g. a mixer, a mixing arm or a stirrer. Such apparatus may also be e.g. a piping fitted with one or more nozzles for injecting the alkaline agent into the piping in which the acidic effluent or filtrate may flow.

The temperature in in step b) may be set e.g. between 25 - 90°C. Increasing the temperature may enhance precipitation.

After the precipitate is separated from the at least a portion of the effluent or filtrate, the purified effluent or filtrate thus obtained has substantially reduced phosphorus content. The removal of phosphorus is typically so efficient that the purified effluent or filtrate obtained may be considered to be substantially free of phosphorus.

It may not always be desirable to completely eliminate phosphorus from the effluent or filtrate, in particular in cases when the effluent or filtrate is subsequently conveyed to a waste water treatment plant. Many waste water treatment plants utilize bacterial processes for waste water treatment, for which a low amount of phosphorus in the effluent or filtrate is preferable or even necessary. Further, it may be sufficient to treat only the first portion of the effluent or filtrate in order to significantly reduce phosphorus content in the effluent or filtrate. For instance, a treatment of all acidic effluents or filtrates obtainable from a process is not necessary to significantly reduce phosphorus in the total volume of effluents and filtrates obtainable from the whole process.

In an embodiment, the at least a portion of the effluent or filtrate consists of 2 - 95 % (v/v); 5 - 95 % (v/v); 5 - 50 % (v/v); or 10 - 40 % (v/v) of the total volume of the effluent or filtrate.

A significant reduction in phosphorus may be obtained even if a relatively small portion of the effluent or filtrate as compared to the whole volume of the effluent or filtrate is treated using the method according to the invention.

In an embodiment, the first portion of the effluent or filtrate consists of 2 - 95 % (v/v); 5 - 95 % (v/v); 5 - 50 % (v/v); or 10 - 40 % (v/v) of the total volume of the effluent or filtrate. In this context, the total volume of the effluent or filtrate should be understood as consisting of the total volume of both the first and second portion.

A significant reduction in phosphorus in effluent or filtrate may be obtained even if the first portion of the effluent or filtrate is a relatively small portion as compared to the whole volume of the effluent or filtrate.

The first and second portion of the effluent or filtrate or their volume ratios may be selected so that e.g. the concentration of phosphorus, the pH of said portions and/or the pH of the combined purified effluent or filtrate and the second portion of the effluent or filtrate is optimal.

In an embodiment, the first portion of the effluent or filtrate has a higher content or concentration of phosphorus than the second portion.

In an embodiment, the first portion of the effluent or filtrate has a phosphorus concentration of 5 - 20 mg/l; or 9 - 16 mg/l.

In an embodiment, the first portion of the effluent or filtrate is obtainable from the stage in which conditions are acidic and in which the content or concentration of phosphorus is highest.

Step f) may be performed at any stage of the process before post-neutralization of the combination obtainable from step f) in a waste water treatment plant, wherein the post-neutralization is performed for adjusting the pH suitable for aerobic treatment. The post-neutralization is typically performed before the aeration basin. It may, for instance, be performed at the fiberline, before preliminary clarifier treatment or at any other stage before aeration.

It should also be understood that step e) (and optionally step g)) and step f) (and optionally h)) may be performed simultaneously or in any order.

In an embodiment, the method further comprises the step h) of conveying the combination of the purified effluent or filtrate and the second portion of the effluent or filtrate obtainable from step f) to waste water treatment or discharge.

The combination of the purified effluent or filtrate and the second portion of the effluent or filtrate obtainable from step f) may be directly conveyed to waste water treatment, e.g. to a waste water treatment plant, or discharge. The pH of the combination of the purified effluent or filtrate and the second portion of the effluent or filtrate obtainable from step f) may also be further adjusted, e.g. to a neutral pH, if necessary.

In an embodiment, the pH of the combination of the purified effluent or filtrate and the second portion of the effluent or filtrate obtainable from step f) is neutral or near neutral.

In an embodiment, the pH of the combination of the purified effluent or filtrate and the second portion of the effluent or filtrate obtainable from step f) is in the range of 6 to 8, or in the range of 6.5 to 7.5.

In an embodiment, the pH of the combination of the purified effluent or filtrate and the second portion of the effluent or filtrate obtainable from step f) is adjusted to neutral or near neutral.

In an embodiment, the pH of the combination of the purified effluent or filtrate and the second portion of the effluent or filtrate obtainable from step f) is adjusted to a pH in the range of 6 to 8, or in the range of 6.5 to 7.5.

If the purified effluent or filtrate is combined with the second portion of the effluent or filtrate, the second portion of the effluent or filtrate is often capable of adjusting the pH to a lower level. The pH of the resulting combination may thus be neutral or close to a neutral pH. Depending e.g. on the ratio of the volume of the purified effluent or filtrate to the volume of the second portion of the effluent or filtrate, pH of the combination of the purified effluent or filtrate and the second portion of the effluent or filtrate obtainable from step f) may be further adjusted. A suitable neutralising agent may be used to adjust the pH of the effluent. The neutralising agent may be an alkaline agent or an acidic agent.

In an embodiment, the alkaline agent with which the pH of the combination of the purified effluent or filtrate and the second portion of the effluent or filtrate obtainable from step f) is adjusted is the same alkaline agent with which pH of the first portion of the effluent or filtrate is adjusted to alkaline in step b).

The present invention further relates to a system for reducing phosphorus in effluent or filtrate from a chemical pulping process which comprises at least one stage in which conditions are acidic; wherein the system comprises:
a digestion apparatus for cooking pulp;
a washing apparatus for washing pulp;
a bleaching apparatus comprising an apparatus for separating acidic effluent or filtrate from pulp obtainable from a bleaching stage in which conditions are acidic;
a green liquor dregs filtration apparatus;
a purification apparatus for removing phosphorus from the acidic effluent or filtrate, comprising an apparatus adapted for mixing an alkaline agent with at least a portion of the acidic effluent or filtrate and for allowing phosphorus to be precipitated in form of a phosphate salt, and a separation apparatus for separating the precipitate to produce purified effluent or filtrate and a sludge comprising the precipitate;
a first conduit between the apparatus for separating acidic effluent or filtrate from pulp and the purification apparatus for conveying the at least a portion of the acidic effluent or filtrate from the apparatus for separating effluent or filtrate from pulp to the purification apparatus; and
a second conduit for conveying the sludge comprising the precipitate from the purification apparatus to the green liquor dregs filtration apparatus.

The green liquor dregs filtration apparatus may comprise a green liquor dregs filter. It may also comprise e.g. an apparatus for washing the green liquor dregs filter and/or the filter cake obtainable using the filter.

In an embodiment, the green liquor dregs filter is pre-coated.

In an embodiment, the green liquor dregs filter is pre-coated with lime mud.

The first conduit for conveying the at least a portion of the acidic effluent or filtrate from the apparatus for separating effluent or filtrate from pulp to the purification apparatus may be connected to said apparatuses either directly or indirectly, or via suitable means. The first conduit provides a flow connection between said apparatuses. In particular, the first conduit provides a flow connection between the apparatus for separating effluent or filtrate from pulp and the apparatus adapted for mixing an alkaline agent with at least a portion of the acidic effluent or filtrate and for allowing phosphorus to be precipitated in form of a phosphate salt.

The separation apparatus for separating the precipitate to produce purified effluent or filtrate and the sludge comprising the precipitate may be e.g. a decanter centrifuge, a clarifier, a solids separator, a flocculation apparatus or a filter such as a pressure filter, a candle filter, or a disc filter.

The second conduit for conveying the sludge comprising the precipitate from the purification apparatus to the green liquor dregs filtration apparatus may be connected to said apparatuses either directly or indirectly, or via suitable means. The second conduit provides a flow connection between said apparatuses.

The system may also contain pumps for various fluids, appropriate piping, tanks, and/or mixers. It may further contain e.g. drying apparatus for drying bleached pulp, a chemical recovery system and/or other components of a chemical pulp mill. The chemical recovery system may include an alkali cycle and a lime circulation system.

In an embodiment, the bleaching apparatus comprises an apparatus for separating effluent or filtrate from pulp obtainable from a bleaching stage for separating acidic effluent or filtrate obtainable from the first bleaching stage in which conditions are acidic.

In an embodiment, the apparatus for separating effluent or filtrate from pulp obtainable from a bleaching stage is a filtering apparatus for filtering acidic effluent or filtrate obtainable from a bleaching stage.

In other embodiments, the apparatus for separating effluent or filtrate from pulp obtainable from a bleaching stage may be a press, a wash press, a drum displacer washer or any other apparatus which is capable of separating pulp and effluent or filtrate.

Each of the first, second and third conduits may comprise e.g. a pipe or any other means for establishing a flow connection.

In an embodiment, the apparatus adapted for mixing an alkaline agent with the at least a portion of the acidic effluent or filtrate comprises a conduit for introducing the alkaline agent. It may further comprise an apparatus for mixing the alkaline agent with the at least a portion of the acidic effluent or filtrate. Such apparatus may be e.g. piping fitted with one or more nozzles for injecting the alkaline agent into the piping in which the at least a portion of the acidic effluent or filtrate may flow.

The alkaline agent may be any alkaline agent described above. In an embodiment, the alkaline agent is
CaO;
an alkali metal hydroxide, such as NaOH;
Ca(OH)₂;
NH₄OH ;
an alkaline effluent or filtrate;
an alkaline bleaching effluent or filtrate; or
a powder, an aqueous solution, or any mixture thereof.

In an embodiment, the system comprises a reactor for bringing the alkaline agent in contact with the at least a portion of the acidic effluent or filtrate to effect the precipitation of phosphorus. The reactor may be fitted with one or more nozzles for injecting the alkaline agent into the reactor. The alkaline agent may thus be introduced continuously by injecting it in a flow of the at least a portion of the acidic effluent or filtrate. In a reactor, the at least a portion of the acidic effluent or filtrate may flow in a pipe and the alkaline agent may be injected into the flow.

In an embodiment, the system comprises:
a digestion apparatus for cooking pulp;
a washing apparatus for washing pulp;
a bleaching apparatus comprising an apparatus for separating effluent or filtrate from pulp obtainable from a bleaching stage in which conditions are acidic;
a green liquor dregs filtration apparatus;
a purification apparatus for removing phosphorus from the acidic effluent or filtrate, comprising an apparatus adapted for mixing an alkaline agent with at least a portion of the acidic effluent or filtrate and for allowing phosphorus to be precipitated in form of a phosphate salt, and a separation apparatus for separating the precipitate to produce purified effluent or filtrate and a sludge comprising the precipitate;
a first conduit for conveying a first portion of the acidic effluent or filtrate from the apparatus for separating effluent or filtrate from pulp to the purification apparatus;
a second conduit for conveying the sludge comprising the precipitate from the purification apparatus to the green liquor dregs filtration apparatus;
a third conduit for conveying a second portion of the acidic effluent or filtrate; and
an apparatus for combining the purified effluent or filtrate with the second portion of the acidic effluent or filtrate.

The apparatus for combining the purified effluent or filtrate with the second portion of the acidic effluent or filtrate may comprise e.g. a fourth conduit for conveying the purified effluent or filtrate from the separation apparatus. It may further comprise means for connecting the fourth conduit for conveying the purified effluent or filtrate from the separation apparatus to the third conduit for conveying a second portion of the acidic effluent or filtrate. The apparatus for combining the purified effluent or filtrate with the second portion of the acidic effluent or filtrate may also comprise e.g. a mixer, a tank or a basin via which the third and fourth conduit are connected. The third and fourth conduit may be connected either directly or indirectly.

The system may further comprise piping or a conduit for passing the combination of the purified effluent or filtrate and the second portion of the effluent or filtrate obtainable from step f) to a waste water treatment plant or to discharge.

The embodiments of the invention described hereinbefore may be used in any combination with each other. Several of the embodiments may be combined together to form a further embodiment of the invention. A method or a system, to which the invention is related, may comprise at least one of the embodiments of the invention described hereinbefore.

An advantage of the present invention is that the content of phosphorus in effluent or filtrate coming from the process may be significantly reduced by the method according to the present invention.

An advantage of the method according to the present invention is that it is a low cost process, which does not require significant investments for equipment. The phosphorus-containing precipitate can be easily removed in the green dregs filtration stage.

It also does not require significant investments for reagents; reagents such as alkaline agents which would in any case be used to adjust the pH of effluent or filtrate may be utilized.

An advantage of the method according to the present invention is that the need to adjust the pH of effluent or filtrate is reduced.

An advantage of the method according to the present invention is that a significant reduction in phosphorus in effluent or filtrate may be obtained even if the volume of the at least a portion of the effluent or filtrate is relatively small as compared to the whole volume of the effluent or filtrate.

An advantage of the method according to the present invention is that small amounts of phosphorus may be retained in the effluent or filtrate that is conveyed to waste water treatment; this may be advantageous e.g. when the subsequent waste water treatment utilizes bacterial processes, for which an amount of phosphorus in the effluent or filtrate is preferable.

An advantage of the method according to the present invention is that it can be performed e.g. at the fiber line of a chemical pulping mill. Thus it can be used to reduce phosphorus in effluent or filtrate already at the chemical pulping mill.

An advantage of the method according to the present invention is that the phosphorus containing precipitate may be recovered and reprocessed for further use.

### EXAMPLES

Reference will now be made in detail to the embodiments of the present invention, an example of which is illustrated in the accompanying drawing.

The description below discloses some embodiments of the invention in such a detail that a person skilled in the art is able to utilize the invention based on the disclosure. Not all steps of the embodiments are discussed in detail, as many of the steps will be obvious for the person skilled in the art based on this specification.

For reasons of simplicity, item numbers will be maintained in the following exemplary embodiments in the case of repeating components.

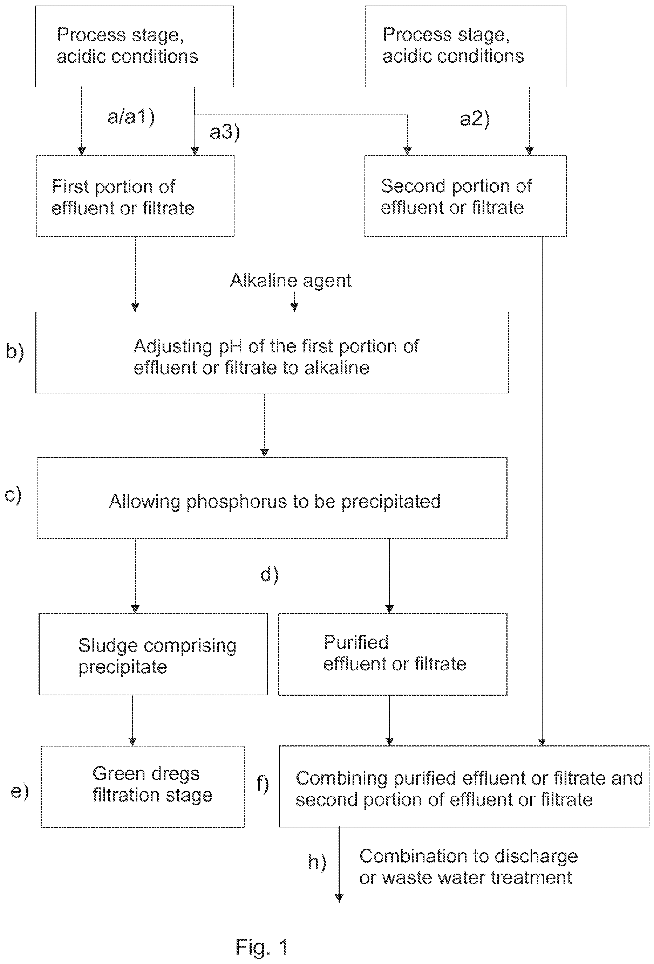

Figure 1 illustrates a method according to one embodiment of the present invention for reducing phosphorus in effluent or filtrate from a process which comprises at least one stage in which conditions are acidic. The process comprises in this embodiment at least two separate process stages in which conditions are acidic. In step a), a first portion of an effluent or filtrate is obtained from one such stage. A second portion of an effluent or filtrate is obtained either from a separate stage in step a2), or the effluent or filtrate which is obtained from a single stage is divided in step a3) into a first portion and a second portion. The first portion thus obtained is conveyed to step b). In the purification stage, an alkaline agent, such as Ca(OH)₂, is added to adjust the pH of a first portion of the effluent or filtrate to alkaline in step b). In step c), phosphorus is allowed to be precipitated, and the precipitate is separated to produce purified effluent or filtrate and a sludge comprising the precipitate in step d). The purified effluent or filtrate from which the precipitate has been separated may be combined in step f) with a second portion of effluent or filtrate obtained in step a2) or a3). The sludge comprising the precipitate is filtered in the green dregs filtration stage in step e). Thus a filter cake comprising the precipitate and green filter dregs can be obtained.

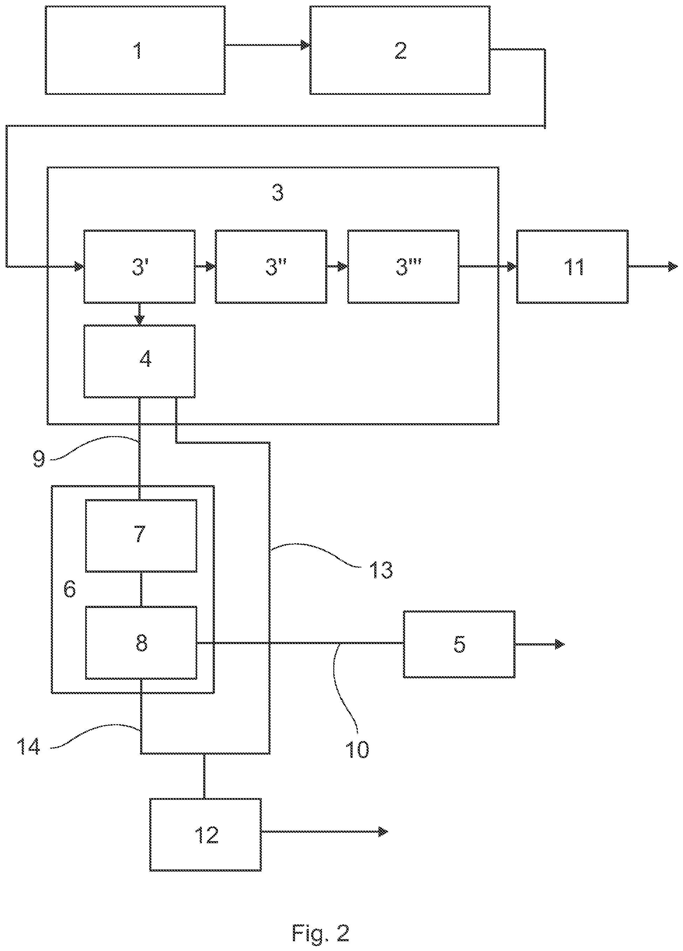

Figure 2 illustrates a system according to one embodiment of the present invention for reducing phosphorus in effluent or filtrate from a chemical pulping process which comprises at least one stage in which conditions are acidic. Various components that may be a part of the system have not been included in this schematic illustration for simplicity. In particular, other components of the chemical recovery system except the green dregs filtration apparatus 5 and any flow connections between the digestion apparatus 1 and the green dregs filtration apparatus 5 have not been included for simplicity.

In this exemplary embodiment, the system comprises a digestion apparatus 1 for cooking pulp from lignocellulosic material. From the digestion apparatus 1, the pulp (often called "brownstock") is conveyed to a washing apparatus 2 for washing the pulp. The washing apparatus 2 may contain e.g. one or more brownstock washers, typically using countercurrent flow. The washed pulp is conveyed to a bleaching apparatus 3. In this embodiment, the bleaching apparatus contains three bleaching stages denoted 3', 3" and 3"'. Stage 3', in this embodiment the first bleaching stage, is a bleaching stage in which conditions are acidic, for instance an A/D1 stage; stages 3" and 3''' may be acidic or alkaline. The system also comprises apparatus 11 for drying pulp. The bleaching apparatus 3 comprises an apparatus 4 for separating acidic effluent or filtrate from pulp obtainable from bleaching stage 3'. The system further comprises a purification apparatus 6 comprising an apparatus 7 adapted for mixing an alkaline agent with at least a portion of the acidic effluent or filtrate and for allowing phosphorus to be precipitated in form of a phosphate salt and a separation apparatus 8 for separating the precipitate to produce purified effluent or filtrate and a sludge comprising the precipitate. The separation apparatus may be e.g. a disc filter. A first conduit 9 is provided for conveying at least a portion of the acidic effluent or filtrate from the apparatus 4 for separating effluent or filtrate from pulp to the purification apparatus 6, specifically to the apparatus 7 adapted for mixing an alkaline agent with the at least a portion of the acidic effluent or filtrate and for allowing phosphorus to be precipitated in form of a phosphate salt. A second conduit 10 is provided for conveying the sludge comprising the precipitate from the purification apparatus 6 and specifically from the separation apparatus 8 to the green liquor dregs filtration apparatus 5. This embodiment further comprises a third conduit 13 for conveying a second portion of the acidic effluent or filtrate obtainable from the apparatus 4 for separating effluent or filtrate from pulp; and a fourth conduit 14 for conveying the purified effluent or filtrate from the separation apparatus 8. The third conduit 13 is connected to the apparatus 4 for separating effluent or filtrate from pulp. The fourth conduit 14 is connected to the separation apparatus 8 for separating the precipitate to produce purified effluent or filtrate. The third conduit 13 and the fourth conduit 14 are connected directly or indirectly for combining the purified effluent or filtrate with the second portion of the acidic effluent or filtrate. The third conduit 13 and the fourth conduit 14 may be connected e.g. so that they form a conduit for conveying the combination of the purified effluent or filtrate and the second portion of the acidic effluent or filtrate to a waste water treatment plant 12 and further to discharge.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for reducing phosphorus in effluent or filtrate from a process which comprises a stage in which green liquor dregs are filtered using a green liquor dregs filter and at least one stage in which conditions are acidic, **characterized in that** the method comprises the steps of:
a) obtaining an effluent or filtrate from a stage in which conditions are acidic, wherein the effluent or filtrate is an aqueous liquid that contains phosphorus;
b) adjusting pH of at least a portion of the effluent or filtrate to alkaline with an alkaline agent;
c) allowing phosphorus in the at least the portion of the effluent or filtrate to be precipitated in form of a phosphate salt;
d) separating the precipitate from the at least the portion of the effluent or filtrate to produce purified effluent or filtrate and a sludge comprising the precipitate; and
e) filtering the sludge comprising the precipitate obtainable from step d) using the green liquor dregs filter.

2. The method according to claim 1, wherein the method comprises the steps of:
a1) obtaining a first portion of an effluent or filtrate from a stage in which conditions are acidic, wherein the effluent or filtrate is an aqueous liquid that contains phosphorus;
a2) obtaining a second portion of an effluent or filtrate from the same or different stage in which conditions are acidic;
b) adjusting pH of the first portion of the effluent or filtrate to alkaline with an alkaline agent;
c) allowing phosphorus in the first portion of the effluent or filtrate to be precipitated in form of a phosphate salt;
d) separating the precipitate from the first portion of effluent or filtrate to produce purified effluent or filtrate and a sludge comprising the precipitate;
e) filtering the sludge comprising the precipitate obtainable from step d) using the green liquor dregs filter; and
f) combining the purified effluent or filtrate with the second portion of the effluent or filtrate.

3. The method according to claim 1 or 2, wherein the precipitate is separated in step d) by decantation, clarification, flotation, sedimentation or filtration.

4. The method according to any one of claims 1 - 3, wherein the sludge comprising the precipitate obtainable from step d) is filtered in step e) to obtain a filter cake comprising the filtered precipitate; and the method further comprises the step g) of recovering the filter cake.

5. The method according to any one of claims 1 - 4, wherein the sludge comprising the precipitate obtainable from step d) and green liquor dregs are filtered in step e) for obtaining a filter cake comprising the precipitate and green liquor dregs; and the method further comprises the step g) of recovering the filter cake.

6. The method according to any one of claims 1 - 5, wherein the sludge comprising the precipitate obtainable from step d) is filtered in step e) using a green liquor dregs filter pre-coated with a layer of lime mud.

7. The method according to any one of claims 1 - 6, wherein the process is a chemical pulping process.

8. The method according to any one of claims 1 - 7, wherein the effluent or filtrate is issued from fiber line operations of a chemical pulp mill.

9. The method according to any one of claims 1 - 8, wherein the effluent or filtrate is obtained from the first stage of the process in which the conditions are acidic.

10. The method according to any one of claims 2 - 9, wherein the first portion of the effluent or filtrate is obtained from a first stage in which conditions are acidic; and the second portion of the effluent or filtrate is obtained from a second stage in which conditions are acidic.

11. The method according to any one of claims 1 - 10, wherein the method comprises the steps of:
a) obtaining an effluent or filtrate from a stage in which conditions are acidic, wherein the effluent or filtrate is an aqueous liquid that contains phosphorus;
a3) dividing the effluent or filtrate into a first portion and a second portion;
b) adjusting pH of the first portion of the effluent or filtrate to alkaline with an alkaline agent;
c) allowing phosphorus in the first portion of the effluent or filtrate to be precipitated in form of a phosphate salt;
d) separating the precipitate from the first portion of effluent or filtrate to produce purified effluent or filtrate and a sludge comprising the precipitate;
e) filtering the sludge comprising the precipitate obtainable from step d) using the green liquor dregs filter; and
f) combining the purified effluent or filtrate with the second portion of the effluent or filtrate.

12. The method according to any one of claims 1 - 11, wherein the pH of the effluent or filtrate obtained in step a), a1) and/or a2) is below 7; or below 6; or below 3.

13. The method according to any one of claims 1 - 12, wherein the effluent or filtrate is an acidic bleaching effluent or an acidic bleaching filtrate.

14. The method according to claim 13, wherein the acidic bleaching filtrate or acidic bleaching effluent is the acidic bleaching filtrate or acidic bleaching effluent obtainable from the first acidic bleaching stage.

15. The method according to any one of claims 1 - 14, wherein the pH of the at least a portion of the effluent or filtrate or the pH of the first portion of the effluent or filtrate is adjusted in step b) to 8 - 14; or 8 - 12; or to 9 - 10; or to 9.5 - 9.8.

16. The method according to any one of claims 1 - 15, wherein the alkaline agent is
CaO;
an alkali metal hydroxide, such as NaOH;
Ca(OH)₂;
NH₄OH ;
an alkaline effluent or filtrate;
an alkaline bleaching effluent or filtrate;
or
a powder, an aqueous solution, or any mixture thereof.

17. The method according to any one of claims 1 - 16, wherein the at least a portion of the effluent or filtrate or the first portion of the effluent or filtrate consists of 2 - 95 % (v/v) ; 5 - 50 % (v/v) ; or 10 - 40 % (v/v) of the total volume of the effluent or filtrate.

18. A system for reducing phosphorus in effluent or filtrate from a chemical pulping process which comprises at least one stage in which conditions are acidic; wherein the system comprises:
a digestion apparatus (1) for cooking pulp;
a washing apparatus (2) for washing pulp;
a bleaching apparatus (3) comprising an apparatus (4) for separating acidic effluent or filtrate from pulp obtainable from a bleaching stage (3') in which conditions are acidic; and
a green liquor dregs filtration apparatus (5) ;
**characterized in that** the system further comprises:
a purification apparatus (6) for removing phosphorus from the acidic effluent or filtrate, comprising an apparatus (7) adapted for mixing an alkaline agent with at least a portion of the acidic effluent or filtrate and for allowing phosphorus to be precipitated in form of a phosphate salt, and a separation apparatus (8) for separating the precipitate to produce purified effluent or filtrate and a sludge comprising the precipitate;
a first conduit (9) between the apparatus (4) for separating acidic effluent or filtrate from pulp and the purification apparatus (6) for conveying at least a portion of the acidic effluent or filtrate from the apparatus (4) for separating acidic effluent or filtrate from pulp to the purification apparatus (6); and
a second conduit (10) for conveying the sludge comprising the precipitate from the purification apparatus (6) to the green liquor dregs filtration apparatus (5).

## Patentansprüche

1. Verfahren zur Reduktion von Phosphor in Abwasser oder Filtrat eines Prozesses, der eine Stufe aufweist, in welcher Grünlaugenbodensatz unter Verwendung eines Grünlaugenbodensatzfilters gefiltert wird, und mindestens eine Stufe aufweist, in welcher saure Bedingungen herrschen, **dadurch gekennzeichnet, dass** das Verfahren die Schritte aufweist:
a) Erhalten eines Abwassers oder Filtrates aus einer Stufe, in welcher saure Bedingungen herrschen, wobei das Abwasser oder Filtrat eine wässrige Lösung ist, die Phosphor enthält;
b) Einstellen eines pH-Wertes von mindestens einem Teil des Abwassers oder Filtrates auf alkalische bzw. basische Bedingungen mit einem alkalischen Mittel;
c) Ausfällen des Phosphors in dem mindestens einen Teil des Abwassers oder Filtrates in Form eines Phosphatsalzes;
d) Trennen des Niederschlags von dem mindestens einen Teil des Abwassers oder Filtrates zur Bildung eines gereinigten Abwassers oder Filtrates und eines Schlamms, der den Niederschlag aufweist; und
e) Filtrieren des Schlamms, der den Niederschlag, der in Schritt d) gewonnen werden kann, aufweist, unter Verwendung des Grünlaugenbodensatzfilters.

2. Verfahren gemäß Anspruch 1, wobei das Verfahren die Schritte aufweist:
a1) Erhalten eines ersten Teils eines Abwassers oder Filtrates aus einer Stufe, in welcher saure Bedingungen herrschen, wobei das Abwasser oder Filtrat eine wässrige Lösung ist, die Phosphor enthält;
a2) Erhalten eines zweiten Teils eines Abwassers oder Filtrates aus der gleichen oder aus einer unterschiedlichen Stufe, in welcher saure Bedingungen herrschen;
b) Einstellen eines pH-Wertes des ersten Teils des Abwassers oder Filtrates auf alkalische bzw. basische Bedingungen mit einem alkalischen Mittel;
c) Ausfällen des Phosphors in dem ersten Teil des Abwassers oder Filtrates in Form eines Phosphatsalzes;
d) Trennen des Niederschlags von dem ersten Teil des Abwassers oder Filtrates zur Bildung eines gereinigten Abwassers oder Filtrates und eines Schlamms, der den Niederschlag aufweist;
e) Filtrieren des Schlamms, der den Niederschlag, der in Schritt d) gewonnen wurde, aufweist, unter Verwendung des Grünlaugenbodensatzfilters; und
f) Vereinigen des gereinigten Abwassers oder Filtrates mit dem zweiten Teil des Abwassers oder Filtrates.

3. Verfahren gemäß Anspruch 1 oder 2, wobei der Niederschlag in Schritt d) durch Dekantieren, Klärung, Flotation, Sedimentation oder Filtration getrennt wird.

4. Verfahren gemäß einem der Ansprüche 1 bis 3, wobei der Schlamm, der den Niederschlag, der in Schritt d) gewonnen wurde, aufweist, in Schritt e) gefiltert wird um einen Filterkuchen bzw. Filterrückstand, der den gefilterten Niederschlag aufweist, zu gewinnen; und das Verfahren ferner den Schritt g), zur Rückgewinnung des Filterkuchens, aufweist.

5. Verfahren gemäß einem der Ansprüche 1 bis 4, wobei der Schlamm, der den Niederschlag, der in Schritt d) gewonnen wurde, und den Grünlaugenbodensatz aufweist, in Schritt e) gefiltert wird um einen Filterkuchen bzw. Filterrückstand, der den Niederschlag und den Grünlaugenbodensatz, aufweist, zu gewinnen; und das Verfahren ferner den Schritt g) zur Rückgewinnung des Filterkuchens, aufweist.

6. Verfahren gemäß einem der Ansprüche 1 bis 5, wobei der Schlamm, der den Niederschlag, der in Schritt d) gewonnen wurde, aufweist, in Schritt e), durch Verwendung eines Grünlaugenbodensatzfilters, der mit einer Kalkschlammschicht vorbeschichtet ist, gefiltert wird.

7. Verfahren gemäß einem der Ansprüche 1 bis 6, wobei der Prozess ein chemisches Aufschlussverfahren ist.

8. Verfahren gemäß einem der Ansprüche 1 bis 7, wobei das Abwasser oder Filtrat aus einem Faserlinienbetrieb oder einer chemischen Zellstoffmühle stammt.

9. Verfahren gemäß einem der Ansprüche 1 bis 8, wobei das Abwasser oder Filtrat aus der ersten Stufe des Prozesses, in welcher saure Bedingungen herrschen, gewonnen wird.

10. Verfahren gemäß einem der Ansprüche 2 bis 9, wobei der erste Teil des Abwassers oder Filtrates aus einer ersten Stufe, in welcher saure Bedingungen herrschen, gewonnen wird; und der zweite Teil des Abwassers oder Filtrates aus einer zweiten Stufe, in welcher saure Bedingungen herrschen, gewonnen wird.

11. Verfahren gemäß einem der Ansprüche 1 bis 10, wobei das Verfahren die Schritte aufweist:
a) Erhalten eines Abwassers oder Filtrates aus einer Stufe, in welcher saure Bedingungen herrschen, wobei das Abwasser oder Filtrat eine wässrige Lösung ist, die Phosphor enthält;
a3) Unterteilen des Abwassers oder Filtrates in einen ersten Teil und einen zweiten Teil;
b) Einstellen eines pH-Wertes des ersten Teils des Abwassers oder Filtrates auf alkalische bzw. basische Bedingungen mit einem basischen Mittel;
c) Ausfällen des Phosphors in dem ersten Teil des Abwassers oder Filtrates in Form eines Phosphatsalzes;
d) Trennen des Niederschlags aus dem ersten Teil des Abwassers oder Filtrates zur Bildung eines gereinigten Abwassers oder Filtrates und eines Schlamms, der den Niederschlag aufweist;
e) Filtrieren des Schlamms, der den Niederschlag, der in Schritt d) gewonnen wurde, aufweist, unter Verwendung des Grünlaugenbodensatzfilters; und
f) Vereinigen des gereinigten Abwassers oder Filtrates mit dem zweiten Teil des Abwassers oder Filtrates.

12. Verfahren gemäß einem der Ansprüche 1 bis 11, wobei der pH-Wert des Abwassers oder Filtrates, das in Schritt a), a1) und/oder a2) gewonnen wurde, unter 7 ist; oder unter 6; oder unter 3.

13. Verfahren gemäß einem der Ansprüche 1 bis 12, wobei das Abwasser oder Filtrat saures Bleichabwasser oder ein saures Bleichfiltrat ist.

14. Verfahren gemäß Anspruch 13, wobei das saure Bleichfiltrat oder saure Bleichabwasser das saure Bleichfiltrat oder saure Bleichabwasser ist, in dem ersten sauren Bleichschritt gewonnen wird.

15. Verfahren gemäß einem der Ansprüche 1 bis 14, wobei der pH-Wert des mindestens einen Teils des Abwassers oder Filtrates oder der pH-Wert des ersten Teils des Abwassers oder Filtrates in Schritt b) auf 8 -14; oder auf 8 -12; oder auf 9 - 10; oder auf 9,5 - 9,8 eingestellt wird.

16. Verfahren gemäß einem der Ansprüche 1 bis 15, wobei das alkalische Mittel ist:
CaO;
ein Alkalimetallhydroxid, wie NaOH;
Ca(OH)₂;
NH₄OH ;
ein alkalisches Abwasser oder Filtrat;
ein alkalisches Bleichabwasser oder Filtrat;
oder
ein Pulver, eine wässrige Lösung oder irgendeine Mischung daraus.

17. Verfahren gemäß einem der Ansprüche 1 bis 16, wobei der mindestens eine Teil des Abwassers oder Filtrates des ersten Teils des Abwassers oder Filtrates aus 2 - 95% (v/v); 5 - 50% (v/v) oder 10 - 40% (v/v) des Gesamtvolumens des Abwassers oder Filtrates besteht.

18. Vorrichtung zur Reduktion von Phosphor in Abwasser oder Filtrat aus einem chemischen Aufschlussverfahren, die mindestens eine Stufe, in welcher saure Bedingungen herrschen, aufweist; wobei die Vorrichtung aufweist:
eine Verdauungs- bzw. Digestionsvorrichtung (1) zum Zellstoffkochen;
eine Waschvorrichtung (2) zum Zellstoffwaschen;
eine Bleichvorrichtung (3), der eine Vorrichtung (4) zum Trennen eines sauren Abwassers oder Filtrats vom Zellstoff, das in einer Bleichstufe (3'), in welcher saure Bedingungen herrschen gewonnen werden kann; und
eine Grünlaugenbodensatzfiltervorrichtung (5);
**gekennzeichnet dadurch, dass** die Vorrichtung ferner aufweist:
eine Reinigungsvorrichtung (6) zum Entfernen von Phosphor aus dem sauren Abwasser oder Filtrat, die eine Vorrichtung (7), die dazu geeignet ist ein alkalisches Mittel mit mindestens einem Teil des sauren Abwassers oder Filtrates zu mischen und Phosphor in Form eines Phosphatsalzes auszufällen, und eine Trennvorrichtung (8) zum Trennen des Niederschlags zur Bildung eines gereinigten Abwassers oder Filtrates und eines Schlamms, der den Niederschlag aufweist;
ein erstes Rohr (9) zwischen der Vorrichtung (4) zum Trennen eines sauren Abwassers oder Filtrates vom Zellstoff und der Reinigungsvorrichtung (6) zum Fördern mindestens eines Teils des sauren Abwassers oder Filtrates aus der Vorrichtung (4) zum Trennen eines sauren Abwassers oder Filtrates vom Zellstoff in die Reinigungsvorrichtung (6); und
ein zweites Rohr (10) zum Fördern des Schlamms, der den Niederschlag aus der Reinigungsvorrichtung, aufweist, in die Grünlaugenbodensatzfiltervorrichtung (5).

## Revendications

1. Procédé pour réduire le phosphore dans un effluent ou filtrat provenant d'un traitement qui comprend un étage dans lequel des résidus de liqueur verte sont filtrés à l'aide d'un filtre de résidus de liqueur verte et au moins un étage dans lequel les conditions sont acides, **caractérisé en ce que** le procédé comprend les étapes consistant :
a) à obtenir un effluent ou filtrat provenant d'un étage dans lequel les conditions sont acides, dans lequel l'effluent ou le filtrat est un liquide aqueux qui contient du phosphore ;
b) à régler le pH d'au moins une portion de l'effluent ou du filtrat à un pH alcalin avec un agent alcalin ;
c) à permettre au phosphore de précipiter dans l'au moins la portion de l'effluent ou du filtrat sous la forme d'un sel de phosphate ;
d) à séparer le précipité de l'au moins la portion de l'effluent ou du filtrat pour produire un effluent ou filtrat purifié et une boue comprenant le précipité ; et
e) à filtrer la boue comprenant le précipité susceptible d'être obtenu à partir de l'étape d) à l'aide du filtre de résidus de liqueur verte.

2. Procédé selon la revendication 1, dans lequel le procédé comprend les étapes consistant :
a1) à obtenir une première portion d'un effluent ou filtrat à partir d'un étage dans lequel les conditions sont acides, dans lequel l'effluent ou le filtrat est un liquide aqueux qui contient du phosphore ;
a2) à obtenir une seconde portion d'un effluent ou filtrat à partir du même étage ou étage différent dans lequel les conditions sont acides ;
b) à régler le pH de la première portion de l'effluent ou du filtrat à un pH alcalin avec un agent alcalin ;
c) à permettre au phosphore de précipiter dans la première portion de l'effluent ou du filtrat sous la forme d'un sel de phosphate ;
d) à séparer le précipité de la première portion d'effluent ou de filtrat pour produire un effluent ou filtrat purifié et une boue comprenant le précipité ;
e) à filtrer la boue comprenant le précipité susceptible d'être obtenu à partir de l'étape d) à l'aide du filtre de résidus de liqueur verte ; et
f) à combiner l'effluent ou le filtrat purifié avec la seconde portion de l'effluent ou du filtrat.

3. Procédé selon la revendication 1 ou 2, dans lequel le précipité est séparé dans l'étape d) par décantation, clarification, flottaison, sédimentation ou filtration.

4. Procédé selon l'une quelconque des revendications 1 à 3, dans lequel la boue comprenant le précipité susceptible d'être obtenu à partir de l'étape d) est filtrée dans l'étape e) consistant à obtenir un gâteau de filtre comprenant le précipité filtré ; et le procédé comprend en outre l'étape g) consistant à récupérer le gâteau de filtre.

5. Procédé selon l'une quelconque des revendications 1 à 4, dans lequel la boue comprenant le précipité susceptible d'être obtenu à partir de l'étape d) et les résidus de liqueur verte sont filtrés à l'étape e) pour obtenir un gâteau de filtre comprenant le précipité et les résidus de liqueur verte ; et le procédé comprend en outre l'étape g) consistant à récupérer le gâteau de filtre.

6. Procédé selon l'une quelconque des revendications 1 à 5, dans lequel la boue comprenant le précipité susceptible d'être obtenu à partir de l'étape d) est filtrée dans l'étape e) à l'aide d'un filtre de résidus de liqueur verte pré-revêtu d'une couche de boue de chaux.

7. Procédé selon l'une quelconque des revendications 1 à 6, dans lequel le traitement est un traitement de réduction en pâte chimique.

8. Procédé selon l'une quelconque des revendications 1 à 7, dans lequel l'effluent ou le filtrat est émis à partir d'opérations de ligne de fibre d'une fabrique de pâte à papier chimique.

9. Procédé selon l'une quelconque des revendications 1 à 8, dans lequel l'effluent ou le filtrat est obtenu à partir du premier étage du traitement dans lequel les conditions sont acides.

10. Procédé selon l'une quelconque des revendications 2 à 9, dans lequel la première portion de l'effluent ou du filtrat est obtenue à partir d'un premier étage dans lequel les conditions sont acides ; et la seconde portion de l'effluent ou du filtrat est obtenue à partir d'un second étage dans lequel les conditions sont acides.

11. Procédé selon l'une quelconque des revendications 1 à 10, dans lequel le procédé comprend les étapes consistant :
a) à obtenir un effluent ou filtrat provenant d'un étage dans lequel les conditions sont acides, dans lequel l'effluent ou le filtrat est un liquide aqueux qui contient du phosphore ;
a3) à diviser l'effluent ou le filtrat en une première portion et une seconde portion ;
b) à régler le pH de la première portion de l'effluent ou du filtrat à un pH alcalin avec un agent alcalin ;
c) à permettre au phosphore de précipiter dans la première portion de l'effluent ou du filtrat sous la forme d'un sel de phosphate ;
d) à séparer le précipité de la première portion d'effluent ou de filtrat pour produire un effluent ou filtrat purifié et une boue comprenant le précipité ;
e) à filtrer la boue comprenant le précipité susceptible d'être obtenu à partir de l'étape d) à l'aide du filtre de résidus de liqueur verte ; et
f) à combiner l'effluent ou le filtrat purifié avec la seconde portion de l'effluent ou du filtrat.

12. Procédé selon l'une quelconque des revendications 1 à 11, dans lequel le pH de l'effluent ou du filtrat obtenu à l'étape a), a1) et/ou a2) est inférieur à 7 ; ou inférieur à 6 ; ou inférieur à 3.

13. Procédé selon l'une quelconque des revendications 1 à 12, dans lequel l'effluent ou le filtrat est un effluent de blanchiment acide ou un filtrat de blanchiment acide.

14. Procédé selon la revendication 13, dans lequel le filtrat de blanchiment acide ou l'effluent de blanchiment acide est le filtrat de blanchiment acide ou l'effluent de blanchiment acide susceptible d'être obtenu à partir du premier étage de blanchiment acide.

15. Procédé selon l'une quelconque des revendications 1 à 14, dans lequel le pH de l'au moins une portion de l'effluent ou du filtrat ou le pH de la première portion de l'effluent ou du filtrat est réglé à l'étape b) entre 8 et 14 ; ou 8 et 12 ; ou 9 et 10 ; ou 9,5 et 9,8.

16. Procédé selon l'une quelconque des revendications 1 à 15, dans lequel l'agent alcalin est
CaO ;
un hydroxyde de métal alcalin tel que NaOH ;
Ca(OH)₂ ;
NH₄OH ;
un effluent ou filtrat alcalin ;
un effluent ou filtrat de blanchiment alcalin ;
ou
une poudre, une solution aqueuse ou tout mélange de ceux-ci.

17. Procédé selon l'une quelconque des revendications 1 à 16, dans lequel l'au moins une portion de l'effluent ou du filtrat ou la première portion de l'effluent ou du filtrat se compose de 2 à 95 % (v/v) ; 5 à 50 % (v/v) ; ou 10 à 40 % (v/v) du volume total de l'effluent ou du filtrat.

18. Système pour réduire le phosphore dans un effluent ou filtrat provenant d'un traitement de réduction en pâte chimique qui comprend au moins un étage dans lequel les conditions sont acides ; dans lequel le système comprend :
un appareil de digestion (1) pour cuisiner la pâte ;
un appareil de lavage (2) pour laver la pâte ;
un appareil de blanchiment (3) comprenant un appareil (4) pour séparer l'effluent ou le filtrat acide de la pâte susceptible d'être obtenue à partir d'un étage de blanchiment (3') dans lequel les conditions sont acides ; et
un appareil de filtration de résidus de liqueur verte (5) ;
**caractérisé en ce que** le système comprend en outre :
un appareil de purification (6) pour retirer le phosphore de l'effluent ou du filtrat acide, comprenant un appareil (7) adapté pour mélanger un agent alcalin avec au moins une portion de l'effluent ou du filtrat acide et pour permettre au phosphore de précipiter sous la forme d'un sel de phosphate, et un appareil de séparation (8) pour séparer le précipité pour produire un effluent ou filtrat purifié et une boue comprenant le précipité ;
un premier conduit (9) entre l'appareil (4) pour séparer l'effluent ou le filtrat acide de la pâte et l'appareil de purification (6) pour transporter au moins une portion de l'effluent ou du filtrat acide de l'appareil (4) pour séparer l'effluent ou le filtrat acide de la pâte vers l'appareil de purification (6) ; et
un second conduit (10) pour transporter la boue comprenant le précipité de l'appareil de purification (6) vers l'appareil de filtration de résidus de liqueur verte (5).
